# EUROPEAN PATENT SPECIFICATION

(11) **EP 0 478 538 B1**
(45) Date of publication and mention of the grant of the patent: **17.07.1996**
(21) Application number: 89906512.2
(22) Date of filing: 12.05.1989
(51) Int. Cl.: B05D 5/08, C08L 27/18, C08L 79/08, B29C 33/68

(54) **NON-STICK BONDER ROLL COATING**
NICHTKLEBENDE BESCHICHTUNG FÜR BINDEROLLEN
REVETEMENT NON-ADHERENT POUR ROULEAUX DE LIAGE

(43) Date of publication of application: 08.04.1992
(73) Proprietor: E.I. DU PONT DE NEMOURS AND COMPANY, Wilmington Delaware 19898 (US)
(72) Inventor: CSAKY, Thomas, J., Midlothian, VA 23113 (US); GARRETT, Richard, R., Richmond, VA 23236 (US); HENRY, Carolyn, MacLeod, Colombus, OH 43206 (US); PUGH, Roland, M., Richmond, VA 23236-3189 (US)
(74) Representative: Jones, Alan John
(86) International application number: US8901990
(87) International publication number: WO9013602

(56) References cited:
- FR-A- 2 317 342
- US-A- 4 183 838
- US-A- 4 369 279
- US-A- 4 451 616
- US-A- 4 451 616
- US-A- 4 554 207
- US-A- 4 554 207
- US-A- 4 599 383
- PATENT ABSTRACTS OF JAPAN vol. 10, no. 134 (M-479)(2191) 17 May 1986

## Description

### BACKGROUND OF THE INVENTION

### 1. Field of the Invention:

This invention provides a non-stick coating on bonder rolls used in the manufacture of polyolefin film-fibril sheets. The coating comprises a low temperature curing polytetrafluoroethylene composition.

### 2. Description of the Prior Art:

Processes for the flash spinning of plexifilamentary strands are disclosed in Blades and White, U.S. Patent No. 3,081,519. Strands from several spinning positions may be deposited and overlapped on a moving belt to form a wide, unbonded sheet as disclosed in Steuber, U.S. Patent No. 3,169,899. These overlapped strand layers can be bonded by heat and pressure into coherent, abrasion-resistant film-fibril sheets which are useful for the making of disposable protective garments, packaging applications, filtration, etc.

One such process for finishing and bonding the unbonded sheet is described in U.S. Patent 3,532,589 to David. The David process comprises thermally bonding the film-fibril sheet by subjecting it in a heating zone to light compression between two surfaces. One surface is a hard, heat-conducting material which is maintained at a temperature substantially equal to or greater than the melting point range of the film-fibril elements. The second surface is a flexible, poor heat conductor. The light compression prevents shrinkage of the film-fibril sheet.

In U.S. Patent 4,554,207, the film-fibril sheet is exposed to the hard heat conducting material for a period of time sufficient to reach a temperature within 7 degrees C of the melting range of the film-fibril elements, but not more than 20 degrees C above the upper limit of the range, and to allow the second face of the sheet to reach a temperature of 0.8 to 10 degrees C lower than the first face of the sheet. After the heat treatment, the sheet is passed, while under light compression, through a cooling zone where the temperature of the film-fibril sheet throughout its thickness is reduced to a temperature less than that at which the sheet will distort or shrink when restrained. Typically, the sheet will be cooled to at least 30 degrees C below the melting temperature of the film-fibrils.

The hard, heat-conducting material is normally the metal surface of a drum. The film-fibril sheet is usually comprised of polyethylene, which has a melting point range of 135 to 137 degrees C.

When the process is operated at high speed, the surface of the drum must be heated to about 140 to 154 degrees C. At these temperatures, the polyethylene film-fibrils tend to stick to the metal surface of the drum. Polyethylene particles generated during spinning and laydown may become detached from the strands, stick to the drum surface, and build up, affecting uniform heat transfer creating a visible defect in the finished sheet.

Treatment of the drum surface with a coating composition comprising a silicone and an epoxy film with small amounts of fluorocarbon copolymer embedded therein is disclosed in U.S. Patent 4,369,279 to Emerick. This composition functions satisfactorily as a release agent for a short time, but soon fails. Globules of molten polyethylene build up on the roll causing the sheet to stick to and wrap around the roll surface, shutting down the finishing line. The roll must then be removed from the finishing line, the old release coating stripped away, and re-coated, resulting in lost production time. Typically, this coating had a useful lifetime on the commercial finishing line of only about one day.

FR-A-2 317 342 discloses a composition for coating non-adhesively a metal surface or a surface withstanding a temperature of at least 220°C, the coating being 5 to 100 µm thick, the composition containing powdered polytetrafluoroethylene and a polyamide-imide resin in solution in an organic solvent. The coated surface is heated to between 220°C and 260°C for 10 to 15 minutes to cross-link the polyamide-imide resin. Also the particles of polytetrafluoroethylene should be as fine as possible, particularly less than 10 µm.

### Summary of the Invention

There is provided by this invention a bonder roll coating for use in the manufacture of polyolefin film-fibril sheets formed from a composition comprising by weight: 5 to 15% polyamide-imide binder resin, 10 to 20% polytetrafluoroethylene and 55 to 75% of at least one organic solvent baked on the roll for at least 6 hours at a temperature in the range from 100 to 170°C.

Also provided by this invention is a bonder roll for use in the manufacture of polyolefin film-fibril sheets wherein release strips are affixed to the outer edges of the roll before or after coating so that the edges of the polyolefin film-fibril sheet travel on the strips.

### Detailed Description of the Preferred Embodiments

The bonder rolls to be coated are of the type generally described in U.S. Patents 3,532,589 and 4,554,207, which patents are herein incorporated by reference.

The roll to be coated is prepared by grinding off the old coating to provide a clean surface for the coating of this invention. The grit material used in the grinding must be gentle enough to remove old coating without damaging the surface of the bonder roll. The grit and particulates from the coating are removed using compressed air before the non-stick coating is applied to the roll.

The non-stick coating of this invention is a low temperature curing polytetrafluoroethylene composition so that the roll may be re-coated in place eliminating costly downtime. The coating comprises polytetrafluoroethylene particles in at least one organic solvent with a binder resin.

Polytetrafluoroethylene particles must range in size from 5 to 100 µm. Preferably the particle size distribution should be 25% 5 to 10 µm; 50% 10 to 30 µm; and 25% 30 to 40 µm, and more than 25% of the particles are larger than 10 µm. Too high a fraction of fine particles in the coating has a detrimental effect on coating release performance and life.

Polytetrafluoroethylene should be present in the range from 10 to 20% by weight of the total composition, with 15% being the preferred amount.

The binder is a polyamide-imide resin and is present in the range from 5 to 15% by weight of the total composition. 10% binder is preferred. The binder can also be a polyamic acid which, when baked on the roll, forms the polyamide-imide resin.

Organic solvents and mixtures thereof compatible with and stable in the presence of the other ingredients make up 55 to 75%, preferably 65 to 75% by weight of the total composition. Examples of organic solvents that are suitable are N-methylpyrrolidone, dimethylformamide, ethyl acetate and xylene.

The non-stick coating of the invention is applied in at least one coat for a preferred final dry film thickness of 0.0038 to 0.0064cm. Prior to coating, the surface of the roll is heated to between 38 and 46°C. The coating is thoroughly mixed and then sprayed on the roll in preferably two coats. Coating thickness is controlled by measuring the volume of coating applied to the roll. If more than one coat is applied, the first coat is sprayed on and cured at 121°C for 10 minutes before the application of the second coat. Before applying the second coat, the roll is cooled to between 38 and 46°C. The final coat is sprayed on and cured at between 160 to 170°C for 6 hours. Once the coating has been cured and the roll temperature has cooled to below 46°C the coating is buffed with fine emery paper followed by buffing with lambs wool to enhance release properties.

If desired, modifying agents, such as pigments, fillers and stabilizers may be added to the composition provided they are compatible with and stable in the presence of the other ingredients.

Final inspection of the roll is made using an instrument such as a film thickness gauge to confirm correct coating application.

Release strips can be applied near the outer edges of the bonder roll. The purpose of these release strips is to support and protect the edges of the film-fibril sheet. In operation, the edges of the film-fibril sheet ride on the surface of the release strips. These release strips reduce heat transfer from the surface of the drum to the normally thinner sheet edges, and reduce melting and sticking of the film fibril sheet edges.

Any material which is sufficiently thermally stable to the temperature conditions of the drum and can be treated to have acceptable release properties, can be used. Release strips of thicknesses in the range of 0.007 to 0.035 cm are suitable. An example of a suitable release strip material would be a fiberglas tape impregnated with tetrafluoroethylene such as "Fluoroglas" a tradename of the Oak Materials Group, Inc. of Hoosick Falls, New York. Typically, the release strips will be positioned on the drum so that the release strips extend from 1 to 4 cm past the edge of the running sheet. The release strips can be applied to the roll before or after coating.

### EXAMPLE

A bonder roll was coated in accordance with the invention and had a coating of dry film thickness between 0.0038 to 0.0064cm formed from a composition comprising by weight: 10% polyamide-imide binder resin, 15% polytetrafluoroethylene; 5% pigment of chromium oxide-green; 28% dimethylformamide; 28% N-methylpyrrolidone; 7% ethyl acetate and 7% xylene baked on the roll for 6 hours at 100 to 170°C. The polytetrafluoroethylene particle size distribution was 25% 5 to 10 microns; 50% 10 to 30 microns and 25% 30 to 40 microns.

A useful life for bonding 2.25 million kilograms of polyethylene film-fibril sheet has been demonstrated.

## Claims

1. A bonder roll coating for use in the manufacture of polyolefin film-fibril sheets formed from a composition comprising by weight: 5 to 15% polyamide-imide binder resin, 10 to 20% polytetrafluoroethylene and 55 to 75% of at least one organic solvent, said coating being obtainable by baking said composition on the roll for at least 6 hours at a temperature of from 100 to 170°C, wherein the polytetrafluoroethylene comprises particles in the range of from 5 to 100 µm and more than 25% of the particles are larger than 10 µm.

2. The coating of claims 1 wherein the organic solvent is selected from dimethylformamide, N-methylpyrrolidone, ethyl acetate, xylene and mixtures thereof.

3. The coating of either of claims 1 and 2 wherein the composition further contains a pigment present in the range from 2 to 10% by weight.

4. The coating of any one of claims 1 to 3 wherein the amount of polytetrafluoroethylene is 15% by weight of the total composition.

5. The coating of any one of claims 1 to 4 wherein the amount of binder is 10% by weight of the total composition.

6. The coating of any one of claims 1 to 5 wherein a total dry film thickness of the coating is between 0.0038 and 0.0064 cm.

7. A bonder roll coated with the coating of any one of claims 1 to 6.

8. The bonder roll of claim 7 wherein a release strip is affixed to the outer edges of the roll so that the edge of the polyolefin film-fibril sheet travels on the strip.

## Patentansprüche

1. Bindewalzenbeschichtung zur Verwendung bei der Herstellung von Polyolefin-Filmfibrillenlagen, die gebildet sind aus einer Zusammensetzung, die, bezogen auf das Gewicht, umfaßt: 5-15% Polyamidimid-Binderharz, 10-20% Polytetrafluorethylen und 55-75% von wenigsten einem organischem Lösungsmittel, wobei die Beschichtung zugänglich ist durch Ofenhärten der Zusammensetzung auf der Walze für wenigstens 6 Stunden bei einer Temperatur von 100-170 °C, worin das Polytetrafluorethylen Teilchen im Bereich von 5-100 µm umfaßt und mehr als 25 % der Teilchen größer sind als 10 µm.

2. Beschichtung nach Anspruch 1, worin das organische Lösungsmittel ausgewählt ist aus Dimethylformamid, N-Methylpyrrolidon, Ethylacetat, Xylol, und aus Gemischen davon.

3. Beschichtung nach einem der Ansprüche 1 und 2, worin die Zusammensetzung außerdem ein Pigment enthält, das im Bereich von 2-10 Gew.-% vorhanden ist.

4. Beschichtung nach einem der Ansprüche 1-3, worin die Menge an Polytetrafluorethylen 15 Gew.-% der Zusammensetzung beträgt.

5. Beschichtung nach einem der Ansprüche 1-4, worin die Menge an Binder 10 Gew.-% der Zusammensetzung beträgt.

6. Beschichtung nach einem der Ansprüche 1-5, worin eine Trockenfilm-Gesamtdicke der Beschichtung zwischen 0,0038 und 0,0064 cm liegt.

7. Bindewalze, die mit der Beschichtung nach einem der Ansprüche 1-6 beschichtet ist.

8. Bindewalze nach Anspruch 7, worin ein Trennstreifen an den Außenrändern der Walze befestigt ist, so daß der Rand der Polyolefin-Filmfibrillenlage auf dem Streifen wandert.

## Revendications

1. Un revêtement pour rouleau de liage destiné à la fabrication de feuilles de film-fibrilles de polyoléfine obtenus à partir de compositions contenant en poids: 5 à 15% de résine polyamide-imide comme liant, 10 à 20% en poids de polytetrafluoroethylène et 55 à 75% d'au moins un solvant organique, ledit revêtement pouvant être obtenu en cuisant ladite composition sur le rouleau pendant au moins 6 heures à une température de 100 à 170°C, et dont le polytetrafluoroethylène comprend des particules dont la dimension est de 5 à 100 µm et dont plus de 25% de particules ont des dimensions supérieures à 10 µm.

2. Le revêtement selon la revendication 1 dans lequel le solvant organique est choisi parmi dimethylformamide, N-methylpyrrolidone, acétate éthyle, xylène et leurs mélanges.

3. Le revêtement selon une quelconque des revendications 1 ou 2 dans lequel la composition comprend en outre pigment présent à raison de 2 à 10% en poids.

4. Le revêtement selon une quelconque des revendications 1 à 3 dans lequel la quantité de polytetrafluoroethylène est de 15% en poids de la composition totale.

5. Le revêtement selon une quelconque des revendications 1 à 4 dans lequel la quantité de liant est de 10% en poids par rapport à la composition totale.

6. Le revêtement selon une quelconque des revendications 1 à 5 dans lequel l'épaisseur totale du film à sec est compris entre 0,0038 et 0,0064 cm.

7. Un rouleau de liage revêtu par un revêtement selon une quelconque des revendications 1 à 6.

8. Le rouleau de liage selon la revendication 7 dans lequel une bande anti adhésive est fixée sur les arêtes extérieurs du rouleau de manière que les bords et de la feuille de film-fibrilles de polyoléfine se déplacent sur la bande.
